# EUROPÄISCHE PATENTANMELDUNG

(11) **EP 0 848 901 A1**
(43) Veröffentlichungstag der Anmeldung: **24.06.1998**
(21) Anmeldenummer: 97118106.0
(22) Anmeldetag: 18.10.1997
(51) Int. Cl.: A01F 12/44, A01F 12/52

(54) **Landwirtschaftliche Erntemaschine**

(30) Priorität: 20.12.1996 DE 19653399
(71) Anmelder: SAME DEUTZ-FAHR S.P.A., 24047 Treviglio (Bergamo) (IT)
(72) Erfinder: von Allwörden, Wilhelm, 89168 Oberstotzingen (DE)
(74) Vertreter: Dreiss, Fuhlendorf, Steimle & Becker

(57) **Zusammenfassung**

Die Erfindung betrifft eine landwirtschaftliche Erntemascchine, insbesondere Mähdrescher, mit mindestens einer Mäh-, Einzugs- und Drescheinrichtung, einer ersten und zweiten Vorbereitungsfläche, einer Siebeinrichtung, einem Rücklaufboden, zumindest einer Überkehrförder- und/oder -drescheinrichtung und einer Nachtrenneinrichtung, wobei die Nachtrenneinrichtung und der Rücklaufboden breiter als die Drescheinrichtung ausgebildet sind.

Nachteilig an diesem Mähdrescher ist die im Vergleich zum Dreschwerk geringere Leistungsfähigkeit der diesem nachgeordneten Bauelemente.

Dieser Nachteil wird u.a. durch Verbreiterung von Nachtrenneinrichtung (4), Rücklaufboden (7), zweiter Vorbereitungsfläche (6) und Siebvorrichtung (8) auf das zulässige Höchstmaß überwunden, in Kombination mit Trennrotoren (4a) als Nachtrenneinrichtung (4) unddurch eine Beaufschlagung der Verbreitungsabschnitte (26) der zweiten Vorbereitungsfläche (6) durch die Mündung (24) der Überkehrfördereinrichtung (23).

## Beschreibung

Die Erfindung betrifft eine landwirtschaftliche Erntemaschine, insbesondere nach dem Oberbegriff des Patentanspruchs 1.

Der Mähdrescher Typ MF760 der Firma Massey Ferguson weist die Merkmale des Oberbegriffs des Patentanspruchs 1 auf.

Die Leistungsfähigkeit eines Mähdreschers wird weniger durch die Leistungsfähigkeit der Drescheinrichtung als vielmehr durch die Leistungsfähigkeit der dieser nachgeordneten Einrichtungen begrenzt. Optimale Leistungsfähigkeit eines Mähdreschers wird durch vergleichbare Leistungsfähigkeit aller seiner Komponenten erreicht.

Bei obigem Mähdrescher wird dieses Ziel durch Verbreiterung der Nachtrenneinrichtungung sowie des Rücklaufbodens gegenüber der Drescheinrichtung angestrebt. Trotz dieser Maßnahmen wird dieses Ziel nicht erreicht, da die Wirksamkeit der der Drescheinrichtung nachgeordneten Einrichtungen hinter der Wirksamkeit der Drescheinrichtung zurückbleibt.

Es ist deshalb Aufgabe der Erfindung, die Leistungsfähigkeit aller der Drescheinrichtung nachgeordneten Einrichtungen der Leistungsfähigkeit der Drescheinrichtung anzupassen, ohne dabei die durch die Straßenverkehrszulassungsordnung begrenzten Abmessungen des Mähdreschers zu überschreiten.

Die Aufgabe wird gelöst durch die kennzeichnenden Merkmale der unabhängigen Ansprüche 1, 4 und 5. Durch die Verbreiterung der zweiten Vorbereitungsfläche ist eine gute Voraussetzung für eine gleichmäßige Beschickung und damit maximale Ausnutzung der ebenfalls verbreiterten und somit wirkungsvolleren Siebeinrichtung gegeben. Erreicht wird dies dadurch, daß das Erntegut aus der Überkehr bevorzugt zur Beaufschlagung der Verbreiterungsabschnitte der zweiten Vorbereitungsfläche benutzt wird. Der mittlere Bereich der zweiten Vorbereitungsfläche wird vor allem von der ersten Vorbereitungsfläche, die lediglich die Breite der Drescheinrichtung aufweist, beaufschlagt. So ergibt sich eine relativ gleichmäßige Beladung der zweiten Vorbereitungsfläche und damit der gesamten Sieb(reinigungs)einrichtung.

Eine vorteilhafte Weiterbildung der Erfindung besteht darin, daß die zweite Vorbereitungsfläche durch die Verbreiterungsabschnitte eine sprunghafte Verbreiterung gegenüber der ersten Vorbereitungsfläche aufweist und daß die Mündungen der Überkehrförder- und/oder -drescheinrichtung in Gutstromrichtung gesehen oberhalb und vor den Verbreiterungsabschnitten angeordnet sind. Die sprunghafte Verbreiterung der zweiten gegenüber der ersten Vorbereitungsfläche bietet beiderseits der ersten Vorbereitungsfläche optimalen Raum für die Mündungen der Überkehrfördereinrichtung, durch die die Verbreiterungsabschnitte mit Erntegut aus der Überkehr beaufschlagt werden.

Neben der erfindungsgemäßen Beaufschlagung der Verbreiterungsabschnitte kann die Beaufschlagung durch die Mündungen der Überkehrfördereinrichtung auch unter den verschiedensten Neigungswinkeln und Neigungsrichtungen derselben von oben oder von der Seite aus erfolgen.

Von Vorteil ist auch, daß die Mündungen feste oder verstellbare und/oder steuerbare Leitvorrichtungen zur Erntegutverteilung aufweisen. Feste Leitvorrichtungen bieten eine einfache und kostengünstige Verteilung des Erntegutes aus der Überkehr auf die zweite Vorbe reitungsfläche, während sich verstellbare oder gar steuerbare Leitvorrichtungen der unterschiedlichen Menge und Qualität des Erntegutstroms aus der Überkehr besser anpassen.

Bei einer landwirtschaftlichen Erntemaschine, insbesondere Mähdrescher, mit mindestens einer Mäh-, Einzugs- und Drescheinrichtung, einer ersten und zweiten Vorbereitungsfläche, einer Siebeinrichtung, einem Rücklaufboden, zumindest einer Überkehrförder- und/oder -drescheinrichtung und einer Nachtrenneinrichtung, wobei die Nachtrenneinrichtung und der Rücklaufboden sowie die Siebeinrichtung und die zweite Vorbereitungsfläche breiter als die Drescheinrichtung ausgebildet sind, hat sich als vorteilhaft erwiesen, daß die erste Vorbereitungsfläche parallele Leitstege aufweist, die in Flußrichtung des Erntegutes gesehen über die erste Vorbereitungsfläche hinausragen und dort fächerförmig gespreizt und vorzugsweise schaufelförmig ausgebildet sind. Diese Leitstege dienen zur gleichmäßigen Erntegutverteilung auf der ersten Vorbereitungsfläche, insbesondere bei Hanglage.

Durch die fächerförmig gespreizten Verlängerungen wird das Erntegut auf der verbreiterten zweiten Vorbereitungsfläche besser verteilt, zumal wenn die Verlängerungen als Schaufeln ausgebildet sind. Dabei können die Schaufeln unterschiedlich gestaltet sein, während der mittlere Leitsteg gerade und ohne Schaufeln ausgebildet ist.

Die Leistungsfähigkeit einer landwirtschaftlichen Erntemaschine, insbesondere eines Mähdreschers, mit mindestens einer Mäh-, Einzugs- und Drescheinrichtung, einer ersten und zweiten Vorbereitungsfläche, einer Siebeinrichtung, einem Rücklaufboden, zumindest einer Überkehrförder- und/oder -drescheinrichtung und einer Nachtrenneinrichtung, wobei die Nachtrenneinrichtung und der Rücklaufboden breiter als die Drescheinrichtung ausgebildet sind, wird durch eine Nachtrenneinrichtung, die zumindest einen Trenn- oder Nachdreschrotor mit einem Rotorkörper und einer darauf befestigtem Rotorspirale und einen die Rotorspirale mit Spiel zumindest teilweise umschließenden Rotormantel aufweist, auf die Leistungsfähigkeit der Drescheinrichtung angehoben. Während die üblichen Schüttler zur Nachtrennung im wesentlichen auf die Schwerkraft angewiesen sind, können die Trennrotoren zusätzlich mit Fliehkraft arbeiten. Neben dem durch die Rotorspirale bewirkten axialen Strohtransport bewirkt deren Zusammenspiel mit dem Rotormantel einen Nachdrusch, so daß die in der Drescheinrichtung anfallende Strohmenge ohne Stau und Erntegutverlust verarbeitet wird.

Dadurch, daß als Nachdresch-/Nachtrenneinrichtung zwei oder mehrere Trennrotoren mit parallelen Achsen angeordnet sind, wird eine Erhöhung des Durchsatzes erreicht.

Das gilt besonders, wenn die Nachtrenneinrichtung gegenüber der Drescheinrichtung auf ein durch die zulässige Fahrzeugbreite vorgegebenes maximales Maß sprunghaft verbreitert ist und wenn zwischen der Drescheinrichtung und der Nachtrenneinrichtung eine Übergabeeinrichtung vorgesehen ist. Durch die Übergabeeinrichtung wird die gleichmäßige Verteilung des aus der Drescheinrichtung kommenden Strohs sichergestellt und damit die Wirksamkeit der Verbreiterung der Nachtrenneinrichtung erst gewährleistet.

Ein Vorteil ist auch, daß erfindungsgemäß die Übergabeeinrichtung als bewegtes, vorzugsweise drehendes Teil und/oder als feststehendes Teil ausgebildet ist, wobei die Übergabeeinrichtung zumindest an ihrem Abgabeende die Breite der Nachtrenneinrichtung aufweist. Drehende Teile sind zwar aufwendig aber auch effizient, während feststehende Teile einfach aber meist weniger wirkungsvoll sind. Es sind auch oszillierende oder pendelnde Teile denkbar. Ebenso drehende Teile, deren Achse nicht senkrecht zum Erntegutstrom stehen, sondern von der Mitte nach außen in Erntegutstromrichtung geschwenkt sind.

Eine Weiterentwicklung besteht darin, daß erfindungsgemäß das drehende und das feststehende Teil Einrichtungen zur gleichmäßigen Verteilung des Erntegutes auf die Nachtrenneinrichtung aufweisen.

Auf diese Weise wird durch Einrichtungen, wie bewegte Zinken an einer Zinkentrommel oder schrägstehenden Rippen an einer Rippentrommel oder Rippen an einem Korb oder Rippen an einem feststehenden Leitblech, eine gleichmäßige Verteilung des Erntegutstroms auf die Nachtrenneinrichtung erreicht.

Es ist vorteilhaft, wenn Rotormäntel, Rotorkörper und der Umfang der Rotorspiralen zylindrisch oder konisch ausgebildet sind. Zylindrische Ausbildung bietet Fertigungsvorteile, konische Ausbildung gestattet eine Beeinflussung des Verlaufs des Durchtrittsquerschnitts der Trennrotoren. Ein großer Eintrittsquerschnitt erleichtert die Strohaufnahme, eine Querschnittsverengung beschleunigt den Strohtransport und fördert den Nachdrusch, während eine Querschnittserweiterung den Strohtransport verlangsamt. So ist ein vom Einlaß der Trennrotoren zu deren Auslaß hin steigernder oder fallender Querschnitt denkbar. Es ist aber auch ein von einem großen Querschnitt ausgehender, sich verjüngender und anschließend sich wieder erweiternder Querschnitt denkbar. Die Querschnittsgestaltung wird durch die entsprechende Ausbildung des Rotormantels und des Rotorkörpers erreicht, wobei sich der Umfang der Rotorspirale immer dem Rotormantel mit Spiel angleicht.

Wenn die Rotormäntel und die Rotorspiralen in Flußrichtung gesehen sich konisch erweiternd ausgebildet sind und wenn benachbarte Mantellinienderselben parallel und die Achsen der Trennrotoren fächerartig gespreizt angeordnet sind, besteht die Möglichkeit, auf die Übergabeeinrichtung zu verzichten, da die Breite des Einlaßbereiches der Trennrotoren in etwa der Breite der Drescheinrichtung entspricht und die Trennrotoren erst in ihrem Auslaßbereich die volle Breite der Nachtrenneinrichtung erreichen.

Grundsätzlich ist auch denkbar, bei zylindrischen Rotormänteln eine Spreizung von deren Achsen vorzusehen.

Die Drehzahl der Trennrotoren kann variierbar sein, um dadurch eine Anpassung an Menge und Zustand des Strohs zu erreichen.

Eine weiterführende Ausbildung der Erfindung besteht darin, daß der an sich bekannte Rücklaufboden der unter der Nachtrenneinrichtung angeordnet ist, auf seiner Oberseite in seinem in Fahrtrichtung gesehen vorderen Bereich Führungseinrichtungen aufweist, die das Erntegut nach außen verteilen. Dadurch wird die verbreiterte zweite Vorbereitungsfläche in ihren Außenbereichen zusätzlich zu dem Überkehrerntegut auch zumindest teilweise durch den Erntegutstrom des Rücklaufbodens beaufschlagt, wodurch eine gleichmäßige Auslastung und Ausnutzung der zweiten Vorbereitungsfläche und damit auch der Siebeinrichtung gewährleistet ist.

Dadurch, daß die Siebeinrichtung ein Obersieb und ein Untersieb aufweist, die sich gegensinnig bewegen, wird ein vibrationsarmer Lauf des Mähdreschers erzielt, da die Massenkräfte der Siebeinrichtung weitgehend ausgeglichen sind, während diese bei der Dreschund Nachtrenneinrichtung wegen rotierender Bauteile ohnehin vermieden werden.

Das Prinzip der gegensinnig schwingenden Bauteile kann auch beim Rückführboden und den Vorbereitungsflächen angewendet werden.

Um die angestrebte maximale Leistungsfähigkeit des Mähdreschers zu erreichen, werden alle kennzeichnenden Merkmale der unabhäng gen Ansprüche 1, 4 und 5 angewendet.

Weitere Merkmale der Erfindung ergeben sich aus der folgenden Beschreibung und der Zeichnung, in der Ausführungsbeispiele der Erfindung schematisch dargestellt sind. Es zeigen:
- Figur 1: Querschnitt durch einen Mähdrescher mit v.a. Übergabe einrichtung und Trennrotor,
- Figur 2: Draufsicht auf Dresch- und Übergabeeinrichtung und zwei Trennrotoren,
- Figur 3: Draufsicht wie Figur 2, jedoch mit drei Trennrotoren,
- Figur 4: Draufsicht wie Figur 2, jedoch mit zwei konischen Trennrotoren,
- Figur 5: Draufsicht auf die erste und zweite Vorbereitungsfläche mit Überkehrförder- und -drescheinrichtung.

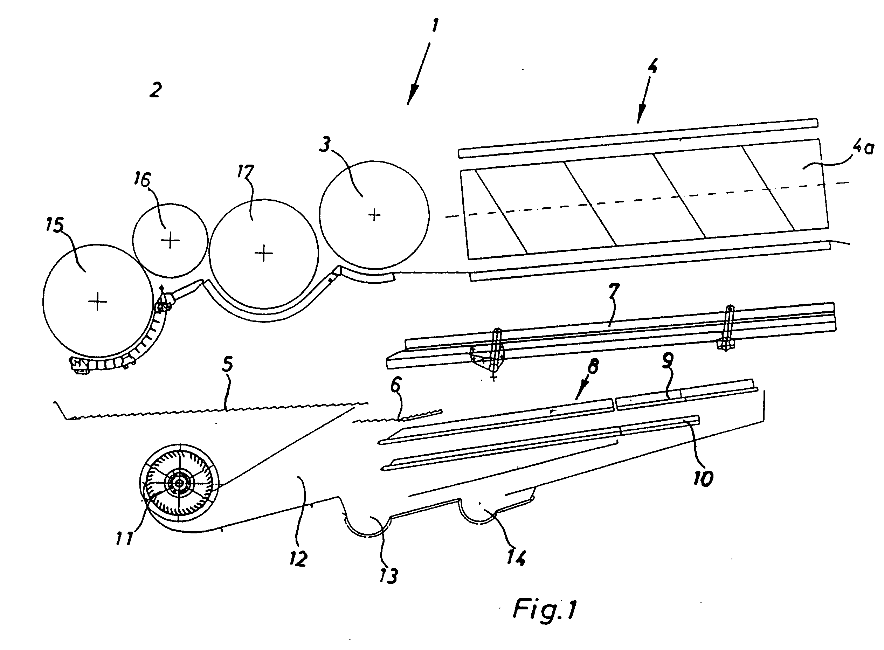

Figur 1 zeigt einen Querschnitt durch den Mähdrescher 1, mit einer Drescheinrichtung 2, einer Übergabeeinrichtung 3, einer Nachtrenneinrichtung 4 mit Trennrotoren 4a, einer ersten Vorbereitungsfläche 5, einer zweiten Vorbereitungsfläche 6, einem Rücklaufboden 7, einer Siebeinrichtung 8, mit einem Obersieb 9 und einem Untersieb 10, einem Windgebläse 11, mit einem Strömungskanal 12, einer Körnerschnecke 13 und einer Überkehrschnecke 14.

Die Drescheinrichtung 2 weist eine Dreschtrommel 15, eine Wendetrommel 16 und einen Turboseparator 17 auf.

Die Übergabeeinrichtung 3 ist als drehendes Teil ausgebildet. Sie kann z.B. als Rippentrommel oder Zinkentrommel ausgeführt sein. Sie dient der gleichmäßigen Verteilung des Erntegutstromes auf die hinter der Drescheinrichtung 2 sprunghaft auf die maximal zulässige Breite vergrößerte Nachtrenneinrichtung 4.

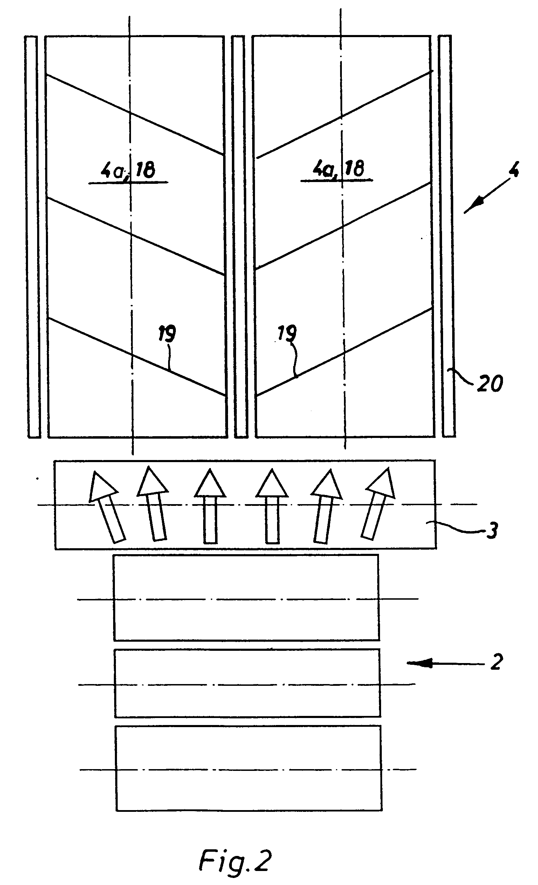

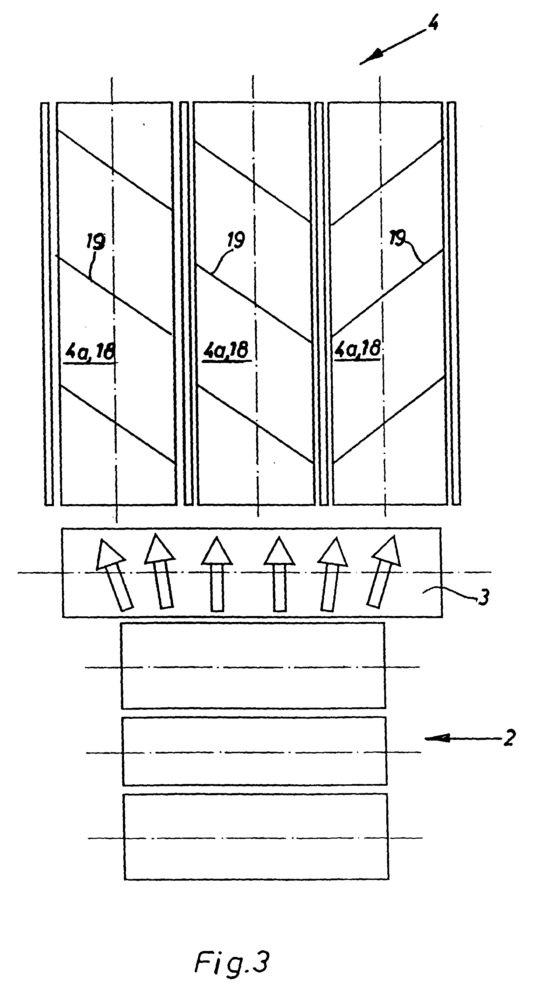

In Figur 2 ist eine Nachtrenneinrichtung 4 mit zwei Trennrotoren 4a, in Figur 3 mit drei Trennrotoren 4a dargestellt. Aus den Figuren 2 und 3 sind auch Anordnung und Funktion der Übergabeeinrichtung 3 ersichtlich. Die Trennrotoren 4a besitzen einen Rotorkörper 18 und eine darauf befestigte Rotorspirale 19. Diese paßt sich mit Spiel einem Rotormantel 20 an, der den Trennrotor 4 umgibt. Die Trennrotoren 4 der Figuren 2 und 3 sind zylindrisch ausgebildet und parallel angeordnet.

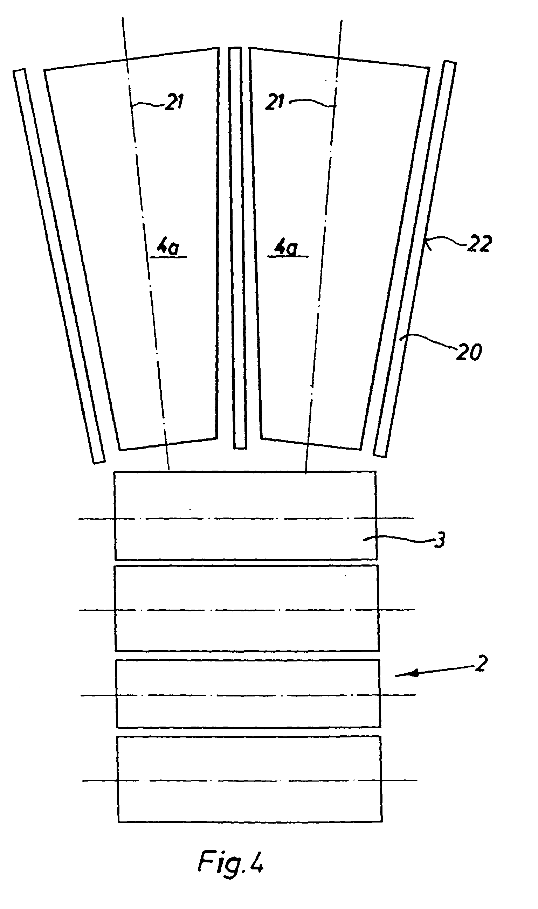

In Figur 4 sind zwei konische Trennrotoren 4a mit konischen Rotormänteln 20 gezeigt, deren Achsen 21 fächerförmig gespreizt und deren benachbarte Mantellinien 21 parallel angeordnet sind. Da der Einlaßbereich dieser Trennrotoren in etwa die Breite der Drescheinrichtung 2 besitzt, braucht der Erntegutstrom nicht umgelenkt zu werden, so daß auf die Übergabeeinrichtung 3 ggfs. verzichtet werden kann.

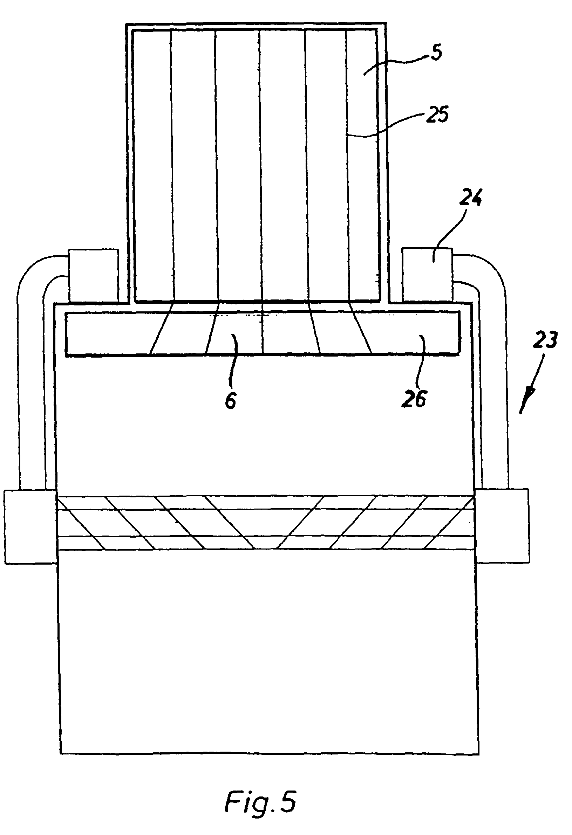

In Figur 5 ist die erste Vorbereitungsfläche 5, die zweite Vorbereitungsfläche 6, die Überkehrschnecke 14, die Überkehrförder- und -drescheinrichtung 23 und deren Mündung 24 dargestellt. Die erste Vorbereitungsfläche 5 weist die Breite der Drescheinrichtung 2, die zweite Vorbereitungsfläche 6 durch die Verbreitungsabschnitt 26 die Breite der Siebeinrichtung auf. Auf der ersten Vorbereitungsfläche 5 sind Leitstege 25 vorgesehen, die über die erste Vorbereitungsfläche 5 hinausragen und in diesem Bereich, ausgehend von dem geraden mittleren Leitsteg, sich fächerförmig ausbreiten und ggfs. schaufelförmig ausgebildet sind. Auf diese Weise wird der Erntegutstrom auf die verbreiterte zweite Vorbereitungsfläche 6 besser verteilt. Hinzukommt, daß die Mündung 24 der Überkehrförder- und -dreschfördereinrichtung 23 im Bereich der Verbreiterungsabschnitte 26 die zweite Vorbereitungsfläche 6 mit Überkehrgut beaufschlagt und damit zur gleichmäßigen Verteilung des Erntegutes auf der zweiten Vorbereitungsfläche 6 und somit auf der Siebeinrichtung 8 beiträgt. Von wesentlicher Bedeutung ist noch, daß die Leitstege 25 in vertikaler Richtung, also höhenverstellbar sind. Zu diesem Zweck sind sie doppelwandig ausgebildet und über Führungselemente verstellbar. Sie können über eine allen Leitstegen 25 gemeinsame Steuereinrichtung gleichzeitig verstellt werden. Die Verstellung kann auch entlang der Vorbereitungsfläche verschieden sein, d.h. zu unterschiedlichen Höhen entlang der Vorbereitungsfläche führen.

Das aus den Trennrotoren 4a abgeschiedene Erntegut gelangt auf einen schwingenden Rücklaufboden 7, der die Breite der Nachtrenneinrichtung 4 aufweist. Er transportiert das Erntegut in Richtung Obersieb 9. Um dort eine optimale Gleichverteilung des Erntegutes zu erreichen, weist der Rücklaufboden 7 an seinem in Fahrtrichtung gesehen vorderen Bereich Führungseinrichtung (wie z.B. Führungsrippen oder Keile) auf, die das Erntegut seitlich nach außen verteilen.

Das Windgebläse 11 mit der Breite der Drescheinrichtung 2 verteilt den Wind über einen Strömungskanal 12 und ggfs. über Leitvorrichtungen auf die gesamte Breite der Siebeinrichtung 8.

Eine konventionelle Körnerschnecke 13 sorgt für den Rücktransport des Erntegutes.

Ein bevorzugtes Anwendungsgebiet der Erfindung sind Mähdrescher, 30 wobei die Erfindung jedoch nicht auf dieses Gebiet beschränkt ist, sondern auch bei weiteren Erntemaschinen (selbstfahrend oder gezogen) in einfacher Weise Anwendung findet.

## Patentansprüche

1. Landwirtschaftliche Erntemaschine, insbesondere Mähdrescher, mit zumindest einer Mäh-, Einzugs- und Drescheinrichtung, einer ersten und zweiten Vorbereitungsfläche, einer Siebeinrichtung, einem Rücklaufboden, zumindest einer Überkehrförder- und/oder drescheinrichtung und einer Nachtrenneinrichtung, wobei die Nachtrenneinrichtung und der Rücklaufboden breiter als die Drescheinrichtung ausgebildet sind, **dadurch gekennzeichnet**, daß die Siebeinrichtung und die zweite Vorbereitungsfläche (6) ebenfalls breiter als die Drescheinrichtung (2) ausgebildet sind und daß die Mündung oder Mündungen (24) der Überkehrförder- und/oder -drescheinrichtung (23) das Überkehrgut vorzugsweise auf die Verbreiterungsabschnitte (26) der zweiten Vorbereitungsfläche (6) fördert oder fördern.

2. Landwirtschaftliche Erntemaschine nach Anspruch 1, dadurch gekennzeichnet, daß die zweite Vorbereitungsfläche (6) durch die Verbreitungsabschnitte (26) eine sprunghafte Verbreiterung gegenüber der ersten Vorbereitungsfläche (5) aufweist und daß die Mündungen (24) der Überkehrförder- und/oder -drescheinrichtung (23) in Gutstromrichtung gesehen oberhalb und vor den Verbreiterungsabschnitten (26) angeordnet sind.

3. Landwirtschaftliche Erntemaschine nach einem der Ansprüche 1 oder 2, dadurch gekennzeichnet, daß die Mündungen (24) feste oder verstellbare und/oder steuerbare Leitvorrichtungen zur Erntegutverteilung aufweisen.

4. Landwirtschaftliche Erntemaschine, insbesondere Mähdrescher mit zumindest einer Mäh-, Einzugs- und Drescheinrichtung, einer ersten und zweiten Vorbereitungsfläche, einer Siebeinrichtung, einem Rücklaufboden, zumindest einer Überkehrförder- und/oder drescheinrichtung und einer Nachtrenneinrichtung, wobei die Nachtrenneinrichtung und der Rücklaufboden sowie die Siebeinrichtung und die zweite Vorbereitungsfläche breiter als die Drescheinrichtung ausgebildet sind, dadurch gekennzeichnet, daß die erste Vorbereitungsfläche (5) parallele Leitstege (25) aufweist, die in Flußrichtung des Ernteguts gesehen, über die erste Vorbereitungsfläche (5) hinausragen und dort fächerförmig gespreizt und vorzugsweise schaufelförmig ausgebildet sind.

5. Landwirtschaftliche Erntemaschine, insbesondere Mähdrescher mit zumindest einer Mäh-, Einzugs- und Drescheinrichtung, einer ersten und zweiten Vorbereitungsfläche, einer Siebeinrichtung, einem Rücklaufboden, zumindest einer Überkehrförder- und/oder drescheinrichtung und einer Nachtrenneinrichtung, wobei die Nachtrenneinrichtung und der Rücklaufboden breiter als die Drescheinrichtung ausgebildet sind, dadurch gekennzeichnet, daß die Nachtrenneinrichtung (4) zumindest einen Trenn- oder Nachdreschrotor (4a) mit einem Rotorkörper (18) und einer darauf befestigten Rotorspirale (19) und einen die Rotorspirale (19) mit Spiel zumindest teilweise umschließenden Rotormantel (20) aufweist.

6. Landwirtschaftliche Erntemaschine nach Anspruch 5, dadurch gekennzeichnet, daß als Nachdresch-/Nachtrenneinrichtung (4) zwei oder mehrere Trennrotoren (4a) mit parallelen Achsen angeordnet sind.

7. Landwirtschaftliche Erntemaschine nach einem der vorhergehenden Ansprüche, dadurch gekennzeichnet, daß die Nachtrenneinrichtung (4) gegenüber der Drescheinrichtung (2) auf ein durch die zulässige Fahrzeugsbreite vorgegebenes maximales Maß sprunghaft verbreitert ist und daß zwischen der Drescheinrichtung (2) und der Nachtrenneinrichtung (4) eine Übergabeeinrichtung (3) vorgesehen ist.

8. Landwirtschaftliche Erntemaschine nach einem der vorhergehenden Ansprüche, dadurch gekennzeichnet, daß die Übergabeeinrichtung (3) als bewegtes, vorzugsweise drehendes Teil und/oder als feststehendes Teil ausgebildet ist, wobei die Übergabeeinrichtung (8) zumindest an ihrem Abgabeende vorzugsweise die Breite der Nachtrenneinrichtung (4) aufweist.

9. Landwirtschaftliche Erntemaschine nach einem der vorhergehenden Ansprüche, dadurch gekennzeichnet, daß das drehende und das feststehende Teil der Übergabeeinrichtung (3) Vorrichtungen zur gleichmäßigen Verteilung des Ernteguts auf die Nachtrenneinrichtung (4) aufweisen.

10. Landwirtschaftliche Erntemaschine nach einem der vorhergehenden Ansprüche, dadurch gekennzeichnet, daß Rotormäntel (20), Rotorkörper (18) und der Umfang der Rotorspiralen (19) zylindrisch oder konisch ausgebildet sind.

11. Landwirtschaftliche Erntemaschine nach Anspruch 5, dadurch gekennzeichnet, daß die Rotormäntel (20) und die Rotor spiralen (19) in Flußrichtung sich konisch erweiternd ausgebildet sind und daß benachbarte Mantellinien (22) derselben parallel und die Achsen (21) der Trennrotoren (4a) fächerartig gespreizt angeordnet sind.

12. Landwirtschaftliche Erntemaschine nach einem der vorhergehenden Ansprüche, dadurch gekennzeichnet, daß der an sich bekannte Rücklaufboden (7), der unter der Nachtrenneinrichtung (4) angeordnet ist, auf seiner Oberseite vorzugsweise in seinem in Fahrtrichtung gesehen vorderen Bereich Führungseinrichtungen aufweist, die das Erntegut seitlich nach außen verteilen.

13. Landwirtschaftliche Erntemaschine nach einem der vorhergehenden Ansprüche, dadurch gekennzeichnet, daß die Siebeinrichtung (8) ein Obersieb (9) und ein Untersieb (10) aufweist, die sich gegensinnig bewegen.

14. Landwirtschaftliche Erntemaschine nach einem der vorhergehenden Ansprüche, dadurch gekennzeichnet, daß die Siebeinrichtung und die zweite Vorbereitungsfläche (6) ebenfalls breiter als die Drescheinrichtung (2) ausgebildet sind und daß die Mündung oder Mündungen (24) der Überkehrförder- und/oder -drescheinrichtung (23) das Überkehrgut vorzugsweise auf die Verbreiterungsabschnitte (26) der zweiten Vorbereitungsfläche (6) fördert oder fördern und daß die erste Vorbereitungsfläche (5) parallele Leitstege (25) aufweist, die in Flußrichtung des Ernteguts gesehen, über die erste Vorbereitungsfläche (5) hinausragen und dort fächerförmig gespreizt und vorzugsweise schaufelförmig ausgebildet sind und daß die Nachtrenneinrichtung (4) zumindest einen Trenn- oder Nachdreschrotor (4a) mit einem Rotorkörper (18) und einer darauf befestigten Rotorspirale (19) und einen die Rotorspirale (19) mit Spiel zumindest teilweise umschließendem Rotormantel (20) aufweist.
